# EUROPÄISCHE PATENTSCHRIFT

(11) **EP 1 857 072 B1**
(45) Veröffentlichungstag und Bekanntmachung des Hinweises auf die Patenterteilung: **30.03.2011**
(21) Anmeldenummer: 07008004.9
(22) Anmeldetag: 19.04.2007
(51) Int. Cl.: A61D 9/00, A01K 13/00, A61F 7/02

(54) **Therapeutische Tierkleidung für Vierbeiner**
Therapeutic clothing for four-legged animals
Vêtements thérapeutiques pour les animaux quadrupèdes

(30) Priorität: 19.04.2006 DE 102006018036
(43) Veröffentlichungstag der Anmeldung: 21.11.2007
(73) Patentinhaber: Sturm, Barbara, 21379 Scharnebeck (DE)
(72) Erfinder: Sturm, Barbara, 21379 Scharnebeck (DE)
(74) Vertreter: Riesenberg, Axel

(56) Entgegenhaltungen:
- CA-A1- 1 261 908
- DE-A1- 1 566 322
- US-A- 4 406 544
- US-A- 5 463 985
- US-A- 5 537 954
- US-A1- 2004 049 309

## Beschreibung

Im tiermedizinischen Bereich werden gewickelte und geklettete Bandagen zu Schützen und Stützen von Verletzungen und degenerativen Beschwerden verwendet.
Aus der US 5537954 ist eine therapeutische kleindung für Vierbeiner bekannt, die eine Mehrzahl von Taschen aufweist, die mit Wärmspeichernden Pads bestücht werden.

Ein bisher ungelöstes Problem ist die punktgenaue Applikation von thermischen Reizen zu therapeutischen Zwecken. Je nach Verletzung oder Erkrankung eines Tieres muß eine spezielle Körperstelle mit Wärme oder Kälte behandelt werden. Das Auflegen einer Wärmeflasche oder eines Kühlpads auf z.B. Schulter - oder Hüftbereich oder Wirbelsäule ist aus anatomischen Gründen nicht möglich. Tiere halten auch nicht aus Vernunftgründen still.

Dieses Problem ist mit Hilfe der im Patentanspruch zu lösen.

Eine Jacke für die Vorderläufe/ Schultern, eine Hose für die Hinterläufe/ Hüften, eine Leibbinde für die Wirbelsäule/ Bauch werden aus temperaturdurchlässigem, elastischem Bandagenmaterial gefertigt. Die Teile werden in verschiedenen Größen hergestellt, so dass sie unterschiedlich großen Tieren immer eng am Körper anliegen.

Jacke und Hose bestehen aus getrennten Ärmeln bzw. Hosenbeinen und werden auf dem Rücken mittels Klettverschluß verschlossen, damit ein schmerzendes Gelenk zum Anlegen der Kleidung nicht unnötig gebeugt werden muß.

Auf diese Kleidung werden nun auf die erkrankten Stellen Taschen geklettet, in die Kühlpads bzw. wärmespeichernde Pads, Kirschkernkissen, Dinkelkissen eingelegt werden können. Diese Taschen sind an der nach außen weisenden Seite mit Isolierfolie ausgekleidet, um einen Temperaturaustausch mit der Umgebungstemperatur zu verzögern. Daß die Taschen auf der Außenseite der Kleidung befestigt und nicht etwa darunter geklemmt werden, ermöglicht unkompliziertes und schonendes Austauschen der Pads.

Eine Individualisierung gemäß Patentanspruch 2 wird möglich, indem durch digitalisierte Fotos eines Tieres, wie in der Maßkonfektion für Damen und Herren bekannt, maßgeschneiderte Kleidungsstücke hergestellt werden.

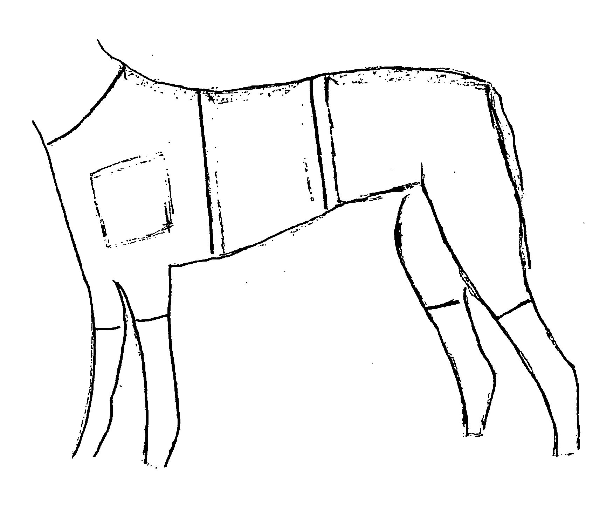

## Patentansprüche

1. Jacke, Leibbinde und Hose für Vierbeiner, körperbetont geschnitten, aus elastischem Bandagenstoff, eng an Vorderläufen/Leib/Hinterläufen anliegende,
wobei die Jacke aus zwei getrennten Ännein für die Vorderläufe besteht, die auf dem Rücken mittels Klettverschuß zusammengefügt werden,
wobei die Hose aus zwei getrennten Hosenbeinen für die Hinterläufe besteht, die auf dem Rücken mittels Klettverschluß zusammengefügt werden
wobei die Leibbinde aus einem Rechteck für den Leib besteht, das auf dem Rücken mittels Klettverschluß zusammengefügt wird,
wobei mittels Klett Taschen in unterschiedlichen Größen vorgeschen sind, die an jeder beliebigen Stelle des Körpers angeheftet werden können wobei je nach therapeutischer Notwendigkeit diese Taschen mit wärmespeichernden Pads bzw. Kühlpads bestückt werden können,
wobei die nach außen zeigende Seite der Tasche ist mit einer isolierfolie ausgekleidet ist die
einen Temperaturaustausch mit der Umgebungstemperatur verzögert.

2. Jacke, Leibbinde, Hose nach Patentanspruch 1., **gekennzeichnet dadurch, daß** die Kleidungsstücke durch Scannen der Tiere maßgeschneidert hergestellt werden.

## Claims

1. Jacket, body-bandage and trousers for four-legged animals, body-stressed cut, made of elastic bandage material, fitting tight on foreleg, body and hind leg,
wherein the jacket consists of two separate sleeves for the forelegs which are assembled on the back by means of Velcro fastening,
wherein the trousers consist of two separate trouser-legs which are assembled on the back by means of Velcro fastening,
wherein the body-bandage consists of a rectangle for the body which is assembled on the back by means Velcro fastening,
wherein pockets of different sizes are provided which can be fixed to any part of the body by means of Velcro fastening,
wherein the pockets can be equipped with heat-storing pads or cooling pads according to therapeutic necessity,
wherein the outer shelf of the pocket is lined with an insulating film slowing down temperature balance with the surroundings temperature.

2. Jacket, body-bandage, trousers according to claim 1, **characterized by** tailor-made clothing by means of scanning the animals.

## Revendications

1. Une veste, un bandage de corps et un pantalon corps souligné, fabriqués d'un tissue de bandage élastique, ayant ajustés aux pattes antérieures, au corps et aux pattes postérieures,
comprenant la veste se compose de deux manches séparées pour les pattes antérieures qui sont fermées au dos par une bande auto-grippante,
comprenant pantalon se compose de deux jambes séparées pour les pattes postérieures qui sont fermées au dos par une bande auto-grippante,
comprenant le bandage de corps est un rectangle pour le corps qui est fermé au dos par une bande auto-grippante,
comprenant des poches dans différentes tailles sont intentionnées qui peuvent être attachées partout sur le corps,
comprenant les poches peuvent être équipées avec une pad de stockage de chaleur ou une pad refroidissement dépendant du besoin thérapeutique,
comprenant la partie extérieure de la poche est doublée à l'intérieur d'un film isolant qui ralentit l'échange de température avec la température ambiante.

2. La veste, le bandage de corps et le pantalon conformément à la revendication 1, **caractérisés par** les vêtements sur mesure en scannant les animaux.
